# FASCICULE DE BREVET EUROPEEN

(11) **EP 3 880 523 B1**
(45) Date de publication et mention de la délivrance du brevet: **31.08.2022**
(21) Numéro de dépôt: 19816831.2
(22) Date de dépôt: 29.10.2019
(51) Int. Cl.: B60R 22/34, B60R 22/24

(54) **SUPPORT MONOBLOC DE FIXATION D'UN ENROULEUR DE CEINTURE DE SECURITE SUR UNE DOUBLURE DE CUSTODE D'UN VEHICULE AUTOMOBILE**
EINTEILIGER TRÄGER ZUR BEFESTIGUNG EINES SICHERHEITSGURTAUFROLLERS AN EINER SEITENWANDVERKLEIDUNG EINES KRAFTFAHRZEUGS
SINGLE-PIECE SUPPORT FOR FIXING A SAFETY BELT WINDER TO A QUARTER PANEL LINING OF A MOTOR VEHICLE

(30) Priorité: 12.11.2018 FR 1871458
(43) Date de publication de la demande: 22.09.2021
(73) Titulaire: PSA Automobiles SA, 78300 Poissy (FR)
(72) Inventeur: RIVIERRE, Laurent, 75015 Paris (FR); TING, Andre, 92800 Puteaux (FR); BARRY, Christophe, 92500 Rueil Malmaison (FR)
(86) Numéro de dépôt international: PCT/FR2019/052573
(87) Numéro de publication internationale: WO 2020/099754

(56) Documents cités:
- CN-U- 203 996 103
- CN-U- 206 297 527
- DE-A1-102015 004 983

## Description

La présente invention relève du domaine des véhicules automobiles et plus particulièrement des modalités de protection des passagers du véhicule en cas d'accident. L'invention porte plus précisément sur des modalités de montage d'un enrouleur d'une ceinture de sécurité sur la caisse d'un véhicule automobile.

### Art antérieur

Les véhicules automobiles comprennent une caisse ménageant une armature robuste sur laquelle sont installés divers équipements du véhicule. L'armature est revêtue d'un habillage comprenant des panneaux qui sont fixés sur la caisse, dont notamment des panneaux latéraux désignés par custodes. Les custodes sont couramment habillées de doublures qui sont disposées vers l'intérieur de la caisse et qui peuvent être utilisées pour le montage de divers équipements du véhicule sur la caisse.

Parmi les équipements du véhicule montés sur la caisse, certains relèvent de la protection des passagers en cas de choc subit par le véhicule. Tel est le cas d'un enrouleur d'une ceinture de sécurité dédiée au maintien d'un passager sur un siège du véhicule. L'enrouleur est agencé en dévidoir d'une réserve de la ceinture de sécurité et est placé à l'arrière d'un siège du véhicule, indifféremment un siège avant ou un siège arrière, en étant installé à l'un des côtés droit ou gauche de la caisse.

Les modalités de montage d'un enrouleur sur la caisse d'un véhicule automobile sont organisées en tenant de diverses contraintes. De telles contraintes relèvent par exemple de l'architecture de la caisse, notamment au regard du ou des éléments de carrosserie sur lequel l'enrouleur peut être fixé, de l'encombrement propre de l'enrouleur et/ou de son éventuelle mobilité sur la caisse pour ne pas entraver le confort d'utilisation de la ceinture par un passager. Il est aussi à tenir compte de la place disponible qui est restreinte dans l'environnement d'installation de l'enrouleur sur la caisse qui est fréquemment encombré par d'autres équipements et/ou éléments de carrosserie du véhicule. Il est aussi à tenir compte des contraintes économiques qui tendent à réduire les coûts de fabrication du véhicule, dans le contexte d'une concurrence économique notoirement sévère dans le domaine automobile qui peut rendre rédhibitoire une solution coûteuse de montage de l'enrouleur sur la caisse.

Dans ce contexte de contraintes, les enrouleurs de ceintures de sécurité sont couramment fixés sur un support qui est lui-même fixé à au moins un élément de carrosserie constitutif de la caisse, potentiellement via un gousset, tel qu'un arc de pavillon, un montant et/ou une doublure de custode par exemple. L'agencement du support et ses modalités de montage sur la caisse sont alors organisés pour résister à l'encontre des efforts exercés par la ceinture et transmis au support via l'enrouleur, notamment en cas de choc subit par le véhicule.

Le document (DE102015004983) décrit un support d'enrouleur de ceinture dont la structure en tôle pliée est conçue pour absorber des forces dans un véhicule et qui correspond au préambule de la revendication 1.

Le document (CN206297527) décrit un support d'enrouleur en tôle liée comprenant une paroi principale aptes à assurer la fixation de l'enrouleur et comprenant deux parois latérales de part et d'autres de la paroi principale, les parois latérales étant fixés au véhicule.

Le document D3 (CN203996103 U) décrit un support d'enrouleur en tôle pliée comprenant une paroi principale aptes à assurer la fixation de l'enrouleur et comprend deux paroi latérales de sorte à former une cavité.

Cependant, l'encombrement de l'enrouleur et/ou sa mise en mobilité sur le support implique fréquemment sa mise en saillie en direction de l'intérieur de la caisse, plus ou moins suivant l'extension transversale du véhicule. C'est pourquoi il est connu d'agencer le support en étrier qui délimite un logement de réception de l'enrouleur. L'enrouleur est fixé sur une paroi principale du support qui est perpendiculairement prolongée par des pattes latérales à bord rabattu qui s'étendent transversalement sur la caisse. Le support est fixé à au moins un élément de carrosserie de la caisse via le rabat que comportent les dites pattes latérales.

L'enrouleur est ainsi disposé transversalement sur la caisse entre la paroi principale du support et ledit montant. Ceci impose alors un accroissement de l'extension transversale des pattes latérales, au détriment de la résistance intrinsèque du support à l'encontre de sa déformation et donc de la qualité du montage de l'enrouleur sur la caisse.

Pour pallier à cet inconvénient, il est connu de ménager une fenêtre de passage de l'enrouleur à travers un montant sur lequel le support est fixé, ce qui permet de réduire l'extension transversale des pattes latérales tel qu'il ressort par exemple du document JP3564986B2 (NISSAN MOTOR CO Ltd).

### Résumé de l'invention

Compte tenu de ce qui précède, l'invention a pour objet un support de montage d'un enrouleur d'une ceinture de sécurité sur la caisse d'un véhicule automobile. L'invention a aussi pour objet un véhicule automobile comprenant une caisse équipée d'au moins un enrouleur d'une ceinture de sécurité fixé à la caisse via un support conforme à l'invention.

Le but de l'invention est de procurer une fixation de qualité de l'enrouleur sur la caisse, en tenant notamment compte du contexte de contraintes et de difficultés à surmonter précédemment mentionnées.

Il est plus spécifiquement recherché un support de l'enrouleur dont la robustesse intrinsèque lui confère une résistance satisfaisante à l'encontre des efforts qu'il est prévu de subir par suite de la mise en œuvre de l'enrouleur en cas de choc subit par le véhicule, et cela en évitant d'accroître significativement sa masse dans le contexte d'un allégement souhaitable du véhicule.

Il est notamment recherché de conférer au support un caractère monobloc par façonnage d'une tôle d'épaisseur modérée, en organisant le support selon une architecture lui conférant une résistance intrinsèque satisfaisante à l'encontre de sa déformation.

Il est encore plus spécifiquement recherché de permettre un montage satisfaisant de l'enrouleur sur la caisse, via un support pouvant s'étendre significativement transversalement en direction de l'intérieur du véhicule compte tenu du volume de l'enrouleur logé à l'intérieur d'un espace ménagé par le support et/ou de son éventuelle montage mobile sur le support.

Il est aussi plus spécifiquement recherché un support de l'enrouleur pouvant être obtenu à moindres coûts sans affecter la qualité du montage de l'enrouleur sur la caisse et/ou sans induire des difficultés d'installation de l'enrouleur sur la caisse qui seraient susceptibles d'accroître inopportunément les coûts de montage de l'enrouleur sur le véhicule.

Les buts visés par la présente invention sont atteints par un support d'un enrouleur d'une ceinture de sécurité pour un véhicule automobile comprenant les caractéristiques de la revendication 1.

Ladite paroi de jonction est notamment fixée aux extrémités transversales des parois latérales qui sont transversalement situées à l'opposé d'une face ouverte d'un logement de réception de l'enrouleur ménagé par le support. Le dit logement est notamment délimité entre la paroi principale, les parois latérales et la paroi de jonction du support. Il est compris ici que ladite face ouverte du logement, ou autrement dit son débouché sur l'extérieur du support, est orientée sensiblement parallèlement à la paroi de jonction, en autorisant éventuellement une émergence de l'enrouleur verticalement hors du logement.

La paroi de jonction, issue du façonnage de la tôle, forme un organe de renfort du support apte à le maintenir en conformation à l'encontre de sa déformation lorsqu'il est soumis à des efforts transmis par l'enrouleur. Lorsque le support est soumis à de tels efforts, la paroi de jonction qui relie longitudinalement entre-elles les parois latérales, fait alors obstacle à leur affaissement transversal par flexion à leur bord jointif avec la paroi principale. Ceci a pour effet de maintenir en conformation le support nonobstant les efforts susceptibles d'être transmis au support par l'enrouleur, et finalement de procurer un maintien efficace en position de l'enrouleur sur la caisse.

Les bords de la paroi de jonction respectivement situés à ses extrémités longitudinales opposées suivant son plan d'extension, sont disjoints des bords des parois latérales qui leurs sont respectivement contigus

De préférence, les parois latérales et la paroi de jonction sont en effet avantageusement formées conjointement par découpage et pliage de la tôle lors de son façonnage pour former le support.

Plus particulièrement selon une forme de réalisation, les ruptures de jonction entre les dits bords de la paroi de jonction et lesdits bords contigus des parois latérales, sont ménagées par des échancrures formées à travers ladite tôle façonnée. Lesdites échancrures sont notamment formées par des découpes de la tôle réalisées lors de son façonnage.

Selon une forme de réalisation, lesdits deuxièmes rabats sont soudés aux parois latérales, indifféremment à leur face extérieure orientées vers l'extérieur du support ou à leur face intérieure orientée vers l'intérieur du logement.

De préférence, la paroi de jonction comporte un troisième rabat participant de la deuxième interface de fixation du support sur la caisse. Ceci permet de conforter la fixation du support à la caisse, de préférence par soudage des premiers rabats et du troisième rabat sur au moins un élément de carrosserie constitutif de la caisse, tel qu'un gousset équipant un montant ou un arc de pavillon, le montant lui-même et/ou l'arc de pavillon lui-même, et/ou de préférence au moins une doublure de custode.

Selon une forme de réalisation, les bords de la paroi principale qui sont respectivement contigus avec les parois latérales et la paroi de jonction sont bombés. Lesdites conformations bombées des bords de la paroi principale forment des organes de renfort de la paroi principale vis-à-vis de son maintien en conformation dans son plan, et forment des organes de renfort de la jonction entre d'une part la paroi principale et d'autre part les parois latérales et la paroi de jonction à l'encontre de leur fléchissement.

Les coins arrondis sont contigus avec lesdites échancrures et procurent un renfort significatif du maintien en conformation de la paroi principale qui est susceptible d'être affaiblie par la rupture de continuité de matière entre la paroi de jonction et les parois latérales résultant de la présence des échancrures. Il est compris ici que ladite rupture de continuité de matière entre la paroi de jonction et les parois latérales est comprise par exclusion des deuxièmes rabats.

Selon une forme de réalisation, les bords de jonction entre les parois latérales et les premiers rabats qui les prolongent respectivement sont renforcés par au moins un relief d'emboutissage de la tôle.

De tels reliefs d'emboutissage ménagent des nervures saillantes, notamment vers l'extérieur du support en direction de la paroi principale. De préférence, le bord de jonction entre la paroi de jonction et le troisième rabat est aussi renforcé par au moins un relief d'emboutissage de la tôle. Les dits reliefs d'emboutissage sont de préférence ménagés par point de déformation de matière en chevauchement desdits bords de jonction. Plusieurs tels reliefs d'emboutissage sont de préférence répartis le long de chacun desdits bords de jonction, en étant plus ou moins proches les uns des autres et localisés sur le support selon l'orientation des composantes d'effort qu'il est prévu de subir.

Selon une forme de réalisation, les extensions transversales respectives des parois latérales et/ou leurs orientations respectives par rapport à la paroi principale sont différenciées.

Il est compris ici que les dites extensions et/ou orientations respectives des parois latérales sont potentiellement identiques ou différentes selon la configuration de l'élément de carrosserie sur lequel le support est prévu d'être fixé, et cela sans affecter la résistance du support à l'encontre de sa déformation sous l'effet des efforts transmis par l'enrouleur. En d'autres termes, l'architecture générale du support autorise son adaptation aisée selon diverses configurations de l'élément de carrosserie sur lequel il est prévu d'être fixé, notamment par ajustement de l'extension transversale des parois latérales et cela sans affecter la qualité obtenue du montage de l'enrouleur sur la caisse.

L'invention a aussi pour objet un véhicule automobile comprenant une caisse équipée d'au moins un enrouleur d'une ceinture de sécurité qui est monté sur un support fixé à au moins un élément de carrosserie que comprend la caisse. Selon l'invention, le véhicule est reconnaissable en ce que ledit support est conforme à l'invention.

### Brève description des figures

L'invention sera mieux comprise à la lecture de la description détaillée qui suit d'un exemple de réalisation de la présente invention, en relation avec les figures suivantes :
[Fig. 1] La figure 1 est une illustration partielle en perspective d'une caisse d'un véhicule automobile, sur laquelle un enrouleur d'une ceinture de sécurité est monté via un support conforme à l'invention.
[Fig. 2] La figure 2 est une illustration partielle en perspective dudit support représenté sur la figure 1, depuis l'extérieur du support en vue plongeante sur une paroi principale qu'il comprend.
[Fig. 3] La figure 3 est une illustration partielle en perspective dudit support représenté sur les figures 1 et 2, représentant les modalités d'assemblage entre une première paroi latérale et une paroi de jonction que comprend le support.
[Fig. 4] La figure 4 est une illustration partielle en perspective dudit support représenté sur les figures 1 à 3, représentant les modalités d'assemblage entre une deuxième paroi latérale et ladite paroi de jonction que comprend le support.

### Description détaillée de l'invention

Les figures et leurs descriptions détaillées non limitatives, exposent l'invention selon des modalités particulières qui ne sont pas restrictives quant à la portée de l'invention telle que définie par les revendications. Les figures et leurs descriptions détaillées d'un exemple de réalisation de l'invention peuvent servir à mieux la définir, si besoin en relation avec la description générale qui vient d'en être faite.

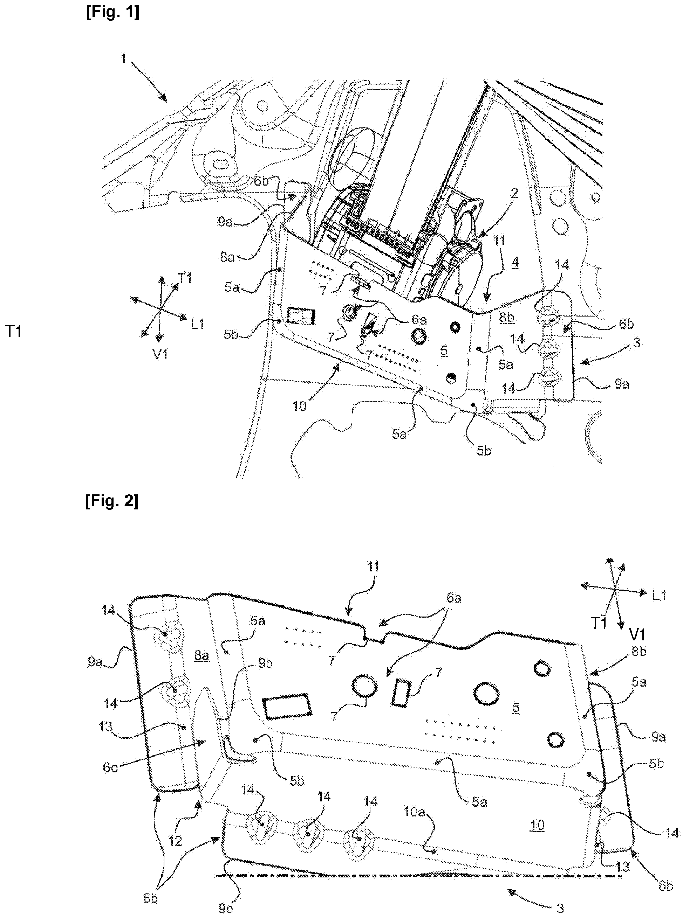

Sur la figure 1, une caisse 1 de véhicule automobile est équipée d'un enrouleur 2 d'une ceinture de sécurité. L'enrouleur 2 est fixé sur un support 3 qui est monté sur au moins un élément de carrosserie 4 de la caisse 1, comme par exemple une doublure de custode tel qu'illustré, et/ou un montant et/ou un arc de pavillon, éventuellement via un gousset.

Sur les figures 1 à 4, le support 3 est formé d'un corps monobloc issu d'une tôle façonnée par découpage, pliage et/ou emboutissage. Le support 3 s'étend suivant les trois directions d'un repère orthonormé qui sont, pour faciliter la compréhension de l'invention, identifiées en correspondance avec les directions longitudinale L1, transversale T1 et verticale V1 communément utilisées dans le domaine automobile pour définir les directions d'extension d'un véhicule automobile et donc de la caisse 1 qu'il comprend.

Le support 3 comprend une paroi principale 5 s'étendant suivant un plan défini par les directions longitudinale L1 et verticale V1 d'extension du support 3. Lorsque le support 3 est installé sur la caisse 1 comme illustré sur la figure 1, la paroi principale 5 est donc sensiblement orientée suivant un plan longitudinal L1 et vertical V1 d'extension de la caisse 1.

Il est précisé ici que le terme sensiblement indique une approximation de la notion à laquelle elle se réfère. L'invention est applicable nonobstant une telle approximation signifiant que la notion considérée peut varier dans le cadre des règles délivrées par l'invention, notamment selon l'architecture propre du véhicule. Autrement dit, une notion à laquelle est affectée le terme sensiblement, ou autre terme apparenté, ne saurait être considérée au sens strict du terme.

L'enrouleur 2 est fixé à la paroi principale 5 du support 3 via une première interface de fixation 6a formée d'ouvertures 7 aptes à recevoir des organes de fixation, comme par exemple au moins un orifice et/ou au moins une échancrure aptes à coopérer avec un ou plusieurs organes de fixation pour maintenir l'enrouleur 2 sur le support 3. L'enrouleur 2 est susceptible d'être fixé sur le support 3 via la première interface de fixation 6a, par exemple par vissage, par emboîtement irréversible et/ou via un tourillon procurant un montage mobile en pivotement de l'enrouleur 2 sur le support 3. Lorsque l'enrouleur 2 est monté sur la caisse 1 via le support 3, celui-ci est transversalement T1 interposé entre la paroi principale 5 et l'élément de carrosserie 4 sur lequel le support 3 est fixé.

A cet effet, le support 3 comprend des parois latérales 8a, 8b qui sont respectivement ménagées aux extrémités longitudinales L1 opposées de la paroi principale 5. Les parois latérales 8a, 8b s'étendent individuellement suivant un plan sensiblement défini par les directions transversale T1 et verticale V1 d'extension du support 3, ou autrement dit sensiblement perpendiculairement au plan d'extension de la paroi principale 5. Au moins les parois latérales 8a, 8b ménagent ainsi des entretoises de séparation transversale T1 entre la paroi principale 5 et l'élément de carrosserie 4 sur lequel support 3 est fixé, pour permettre l'extension transversale T1 de l'enrouleur 2 entre la paroi principale 5 et ledit élément de carrosserie 4.

Les extensions transversales T1 et/ou les orientations respectives des parois latérales 8a, 8b sont susceptibles de varier de l'une à l'autre des parois latérales 8a, 8b, selon la configuration de l'élément de carrosserie 4 sur lequel le support 3 est fixé. Les parois latérales 8a, 8b peuvent être plus ou moins individuellement inclinées par rapport à la paroi principale 5 ou autrement dit par rapport à leur perpendicularité vis-à-vis du plan d'extension de la paroi principale 5, sans affecter la robustesse recherchée du support 3.

Chacune des parois latérales 8a, 8b est munie d'un premier rabat 9a sensiblement orienté suivant un plan défini par les directions longitudinale L1 et verticale V1, en étant sensiblement orienté parallèlement au plan d'extension de la paroi principale 5. Les premiers rabats 9a sont tournés longitudinalement L1 vers l'extérieur du support 3 depuis leur bord de jonction aux parois latérales 8a, 8b, en participant d'une deuxième interface de fixation 6b du support 3 à l'élément de carrosserie 4 sur lequel le support 3 est prévu d'être fixé, avantageusement par soudage tel qu'illustré.

Les parois latérales 8a, 8b sont reliées entre elles par une paroi de jonction 10, à leur extrémité transversale T1 la plus éloignée de l'élément de carrosserie 4 sur lequel le support 3 est prévu d'être fixé. La paroi de jonction 10 s'étend suivant un plan défini par les directions longitudinale L1 et transversale T1 d'extension du support 3, sensiblement perpendiculairement au plan d'extension de la paroi principale 5.

Un troisième rabat 9c globalement plan est ménagé le long de la paroi de jonction 10 à son bord 10a prévu d'être orienté vers l'élément de carrosserie 4 sur lequel le support 3 est destiné à être fixé. Le troisième rabat 9c s'étend sensiblement suivant les directions longitudinale L1 et verticale V1 d'extension du support 3, et participe de la deuxième interface de fixation 6b, en étant de préférence fixé par soudage sur l'élément de carrosserie 4. Les plans d'extension respectifs des premiers rabats 9a d'une part sont susceptibles d'être confondus ou d'être transversalement décalés l'un par rapport à l'autre, et d'autre part sont susceptibles d'être confondus ou d'être transversalement décalés par rapport au plan d'extension du troisième rabat 9c.

Le support 3 délimite ainsi un espace de réception de l'enrouleur 2, ou autrement dit un logement pour l'enrouleur 2, entre la paroi principale 5, les parois latérales 8a, 8b et la paroi de jonction 10. La paroi de jonction 10 étant ménagée sur le support 3 à son extrémité transversale T1 la plus éloignée de l'élément de carrosserie 4 sur lequel le support 3 est prévu d'être fixé, ledit espace est ouvert suivant un plan défini par les directions transversale T1 et longitudinale L1. Autrement dit, ledit logement comporte un débouché 11 orienté sensiblement parallèlement à la paroi de jonction 10, à travers lequel l'enrouleur 2 peut éventuellement émerger suivant l'extension verticale V1 du support 3.

La paroi principale 5, les parois latérales 8a, 8b, la paroi de jonction 10 et les rabats 9a, 9b, 9c dont les parois latérales 8a, 8b et la paroi de jonction 10 sont respectivement pourvues, sont formées par découpage puis par pliage de la tôle suivant les plans respectifs d'extension. Dans ce contexte, la paroi de jonction 10 est disjointe des parois latérales 8a, 8b, en raison de la présence d'échancrures 12 ménagées par découpage de la tôle entre la paroi de jonction 10 et respectivement chacune des parois latérales 8a, 8b, pour permettre de former le support 3 à partir du pliage de la tôle prédécoupée.

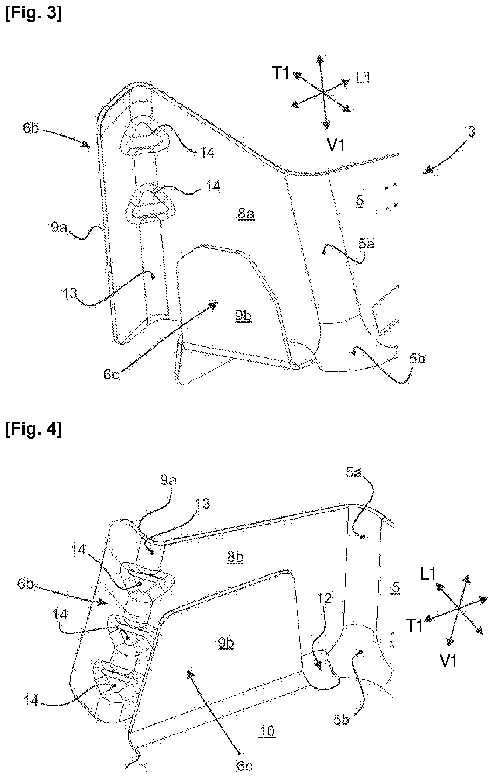

Pour sa fixation aux parois latérales 8a, 8b, la paroi de jonction 10 est pourvue, à chacune de ses extrémités longitudinales opposées, d'un deuxième rabat 9b participant d'une troisième interface de fixation 6c de la paroi de jonction 10 aux parois latérales 8a, 8b. Les deuxièmes rabats 9b s'étendent en couverture des échancrures 12 depuis la paroi de jonction 10 vers les parois latérales 8a, 8b qui leurs sont respectivement affectées. Les deuxièmes rabats 9b sont fixés par soudage aux parois latérales 8a, 8b, de préférence à la face extérieure de l'un des deuxièmes rabats 9a comme représenté sur la figure 3 et à la face intérieure de l'autre des deuxièmes rabats 9a comme représenté sur la figure 4.

Les deuxièmes rabats 9b ménagent une doublure des parois latérales qui participe au renfort du support 3 à l'encontre de sa déformation et donc qui participe à sa résistance intrinsèque aux efforts transmis par l'enrouleur 2 qu'il est susceptible de supporter.

Pour conforter le renfort du support 3, les bords 5a de la paroi principale 5 qui sont respectivement contigus avec les parois latérales 8a, 8b et la paroi de jonction 10 sont significativement bombés. En outre une conformation significativement arrondie est conférée aux coins 5b de la paroi principale 5 qui sont situés dans ses zones de jonction avec la paroi de jonction 10 et les parois latérales 8a, 8b. Une telle conformation arrondie desdits coins est configurée pour renforcer le support 3 compte tenu de la contiguïté entre lesdits coins 5b et les échancrures 12 ménagées entre la paroi de jonction 10 et les parois latérales 8a, 8b.

De plus pour renforcer encore le support 3 dans sa zone de fixation à l'élément de carrosserie 4, les bords de jonction 13 entre les parois latérales 8a, 8b et les premiers rabats 9a, ainsi que le bord 10a de la paroi de jonction 10 la reliant avec le troisième rabat 9c, sont renforcés par au moins un relief 14 d'emboutissage de la tôle. Lesdits reliefs 14 forment des nervures de renfort qui s'étendent ponctuellement en chevauchement desdits bords de jonction 13, plusieurs reliefs 14 étant diversement répartis le long desdits bords de jonction 13. Les reliefs 14 sont ponctuellement localisés sur lesdits bords de jonction 13 à distance les uns des autres, en tenant compte des contraintes localisées que le support 3 est susceptible de subir via la deuxième interface de fixation 6b.

## Revendications

1. Support (3) monobloc d'un enrouleur (2) d'une ceinture de sécurité pour un véhicule automobile, le support (3) qui s'étend suivant les trois directions d'un repère orthonormé qui sont identifiées en correspondance avec les directions longitudinale (L1), transversale (T1) et verticale (V1) communément utilisées dans le domaine automobile pour définir les directions d'extension d'un véhicule automobile, étant issu d'une tôle façonnée ménageant une paroi principale (5) globalement plane du support (3) qui s'étend dans son plan suivant des directions longitudinale (L1) et verticale (V1) d'extension du support (3) et qui est pourvue d'une première interface de fixation (6a) de l'enrouleur (2) sur le support (3), des parois latérales (8a, 8b) globalement planes prolongeant sensiblement perpendiculairement ladite paroi principale (5) à ses bords (5a) longitudinalement (L1) opposés, en s'étendant dans leur plan sensiblement suivant les directions transversale (T1) et verticale (V1) d'extension du support (3), lesdites parois latérales (8a, 8b) comportant chacune un premier rabat (9a) participant d'une deuxième interface de fixation (6b) du support (3) sur une caisse (1) du véhicule, lesdites parois latérales (8a, 8b) étant longitudinalement reliées entre elles par une paroi de jonction (10) globalement plane s'étendant suivant les directions longitudinale (L1) et transversale (T1) d'extension du support (3), les bords de la paroi de jonction (10) respectivement situés à ses extrémités longitudinalement (L1) opposées suivant son plan d'extension, étant disjoints des bords des parois latérales (8a, 8b) qui leurs sont respectivement contigus, **caractérisée en ce que** la paroi de jonction (10) est prolongée sensiblement perpendiculairement à son plan d'extension par des deuxièmes rabats (9b) qui sont ménagés aux extrémités longitudinalement opposées de la paroi de jonction (10) en formant une troisième interface de fixation (6c) de la paroi de jonction (10) aux parois latérales (8a, 8b) suivant leur plan d'extension, les coins (5b) de la paroi principale (5) situés dans ses zones de jonction avec la paroi de jonction (10) et les parois latérales (8a, 8b), étant arrondis.

2. Support (3) selon la revendication 1, **caractérisé en ce que** les ruptures de jonction entre lesdits bords verticaux de la paroi de jonction (10) et lesdits bords contigus des parois latérales (8a, 8b), sont ménagées par des échancrures (12) formées à travers ladite tôle façonnée.

3. Support (3) selon l'une quelconque des revendications 1 et 2, **caractérisé en ce que** lesdits deuxièmes rabats (9b) sont soudés aux parois latérales (8a, 8b).

4. Support (3) selon l'une quelconque des revendications 1 à 3, **caractérisé en ce que** la paroi de jonction (10) comporte un troisième rabat (9c) participant de la deuxième interface de fixation (6b) du support (3) sur la caisse.

5. Support (3) selon l'une quelconque des revendications 1 à 4, **caractérisé en ce que** les bords (5a) de la paroi principale (5) qui sont respectivement contigus avec les parois latérales (8a, 8b) et la paroi de jonction (10) sont bombés.

6. Support (3) selon l'une quelconque des revendications 1 à 5, **caractérisé en ce que** les bords de jonction (13) entre les parois latérales (8a, 8b) et les premiers rabats (9a) qui les prolongent respectivement, sont renforcés par au moins un relief (14) d'emboutissage de la tôle.

7. Support (3) selon l'une quelconque des revendications 1 à 6, **caractérisé en ce que** les extensions transversales (T1) respectives des parois latérales (8a, 8b) et/ou leurs orientations respectives par rapport à la paroi principale (5) sont différenciées.

8. Véhicule automobile comprenant une caisse (1) équipée d'au moins un enrouleur (2) d'une ceinture de sécurité qui est monté sur un support (3) fixé à au moins un élément de carrosserie (4) que comprend la caisse (1), **caractérisée en ce que** ledit support (3) est conforme à l'une quelconque des revendications 1 à 7.

## Patentansprüche

1. Einstückiger Träger (3) für einen Gurtaufroller (2) eines Sicherheitsgurtes für ein Kraftfahrzeug, wobei der Träger (3), der sich in den drei Richtungen einer Orthonorm-Markierung erstreckt, die entsprechend den im Kraftfahrzeugbereich üblicherweise verwendeten Längs- (L1), Quer- (T1) und Vertikalrichtungen (V1) identifiziert werden, aus einem geformten Blech stammt, das eine im Wesentlichen ebene Hauptwand (5) des Trägers (3) bildet, die sich in ihrer Ebene entlang der Längs- (L1) und Vertikalrichtungen (V1) der Ausdehnung des Trägers erstreckt 3), der mit einer ersten Befestigungsschnittstelle (6a) für die Wickelrolle (2) auf dem Träger (3) versehen ist, wobei im Wesentlichen ebene Seitenwände (8a, 8b) die Hauptwand (5) im Wesentlichen senkrecht zu ihren gegenüberliegenden Längsrändern (5a) (L1) verlängern, wobei sie sich in ihrer Ebene im Wesentlichen in der Querrichtung (T1) und der vertikalen (V1) Erstreckungsrichtung des Trägers (3) erstrecken, wobei die Seitenwände (8a, 8b) jeweils eine erste Klappe (9a) aufweisen, die an einer zweiten Befestigungsschnittstelle (6b) des Trägers (3) auf einem Fahrzeugaufbau (1) teilnimmt, wobei die Seitenwände (8a, 8b) in Längsrichtung durch eine im Wesentlichen ebene Verbindungswand (10) miteinander verbunden sind, die sich in Längsrichtung (L1) und Querrichtung (T1) der Ausdehnung des Trägers (3) erstreckt, wobei die Ränder der Verbindungswand (10), die sich jeweils an ihren in Längsrichtung (L1) gegenüberliegenden Enden entlang ihrer Erstreckungsebene befinden, von den Rändern der Seitenwände (8a, 8b) getrennt sind, die jeweils an sie angrenzen, **dadurch gekennzeichnet, dass** die Verbindungswand (10) im Wesentlichen senkrecht zu ihrer Erstreckungsebene durch zweite Klappen (9b) verlängert ist an den sich in Längsrichtung gegenüberliegenden Enden der Verbindungswand (10) eine dritte Befestigungsgrenzfläche (6c) der Verbindungswand (10) an den Seitenwänden (8a, 8b) entlang deren Erstreckungsebene bildet, wobei die Ecken (5b) der Hauptwand (5) in ihren Verbindungsbereichen mit der Verbindungswand (10) und den Seitenwänden (8a, 8b) abgerundet sind.

2. Träger (3) nach Anspruch 1, **dadurch gekennzeichnet, dass** die Verbindungsbrüche zwischen den Kanten der Verbindungswand (10) und den benachbarten Kanten der Seitenwände (8a, 8b) durch Aussparungen (12) gebildet sind, die durch das geformte Blech hindurch ausgebildet sind.

3. Träger (3) nach einem der Ansprüche 1 und 2, **dadurch gekennzeichnet, dass** die zweiten Klappen (9b) an die Seitenwände (8a, 8b) geschweißt sind.

4. Träger (3) nach einem der Ansprüche 1 bis 3, **dadurch gekennzeichnet, dass** die Verbindungswand (10) eine dritte Klappe (9c) aufweist, die an der zweiten Befestigungsgrenzfläche (6b) des Trägers (3) an der Karosserie teilnimmt.

5. Träger (3) nach einem der Ansprüche 1 bis 4, **dadurch gekennzeichnet, dass** die Ränder (5a) der Hauptwand (5), die jeweils an die Seitenwände (8a, 8b) und die Verbindungswand (10) angrenzen, ballig sind.

6. Träger (3) nach einem der Ansprüche 1 bis 5, **dadurch gekennzeichnet, dass** die Verbindungskanten (13) zwischen den Seitenwänden (8a, 8b) und den ersten Klappen (9a), die sie jeweils verlängern, durch mindestens eine Prägeerhebung (14) des Blechs verstärkt sind.

7. Träger (3) nach einem der Ansprüche 1 bis 6, **dadurch gekennzeichnet, dass** die jeweiligen Quererstreckungen (T1) der Seitenwände (8a, 8b) und/oder ihre jeweiligen Orientierungen bezüglich der Hauptwand (5) unterschiedlich sind.

8. Kraftfahrzeug, umfassend eine Karosserie (1), die mit mindestens einer Aufrolleinrichtung (2) eines Sicherheitsgurts ausgestattet ist, der auf einem Träger (3) montiert ist, der an mindestens einem Karosserieelement (4) befestigt ist, das die Karosserie (1) umfasst, **dadurch gekennzeichnet, dass** der Träger (3) einem der Ansprüche 1 bis 7 entspricht.

## Claims

1. Support (3) of a retractor (2) of a safety belt for a motor vehicle, the support (3) which extends along the three directions of an orthonormal mark which are identified in correspondence with the longitudinal (L1), transverse (T1) and vertical (V1) directions commonly used in the motor vehicle field to define the extension directions of a motor vehicle, being derived from a shaped sheet forming a generally flat main wall (5) of the support (3) which extends in its plane along longitudinal (L1) and vertical (V1) extension directions of the support (3) and which is provided with a first interface (6a) for fixing the reel (2) to the support (3), generally flat side walls (8a, 8b) extending substantially perpendicularly said main wall (5) to its longitudinally opposite edges (5a) (L1), extending in their plane substantially in the transverse (T1) and vertical (V1) directions of extension of the support (3), said side walls (8a, 8b) each comprising a first flap (9a) participating in a second interface (6b) for fixing the support (3) to a body (1) of the vehicle, said side walls (9a) 8a, 8b) being longitudinally connected to one another by a generally flat connecting wall (10) extending in the longitudinal (L1) and transverse (T1) direction of extension of the support (3), the edges of the connecting wall (10) respectively located at its longitudinally opposite ends (L1) in its extension plane being separated from the edges of the side walls (8a, 8b) which are respectively adjacent thereto, **characterized in that** the connecting wall (10) is extended substantially perpendicularly to its extension plane by second flaps (9b) which are provided at the longitudinally opposite ends from the junction wall (10) by forming a third fastening interface (6c) from the junction wall (10) to the side walls (8a, 8b) along their plane of extension, the corners (5b) of the main wall (5) located in its zones of junction with the junction wall (10) and the side walls (8a, 8b) being rounded.

2. Support (3) according to claim 1, **characterized in that** the junction breaks between said edges of the junction wall (10) and said contiguous edges of the side walls (8a, 8b) are formed by notches (12) formed through said shaped sheet.

3. Support (3) according to any one of claims 1 and 2, **characterized in that** said second flaps (9b) are welded to the side walls (8a, 8b).

4. Support (3) according to any one of Claims 1 to 3, **characterized in that** the junction wall (10) comprises a third flap (9c) participating in the second interface (6b) for fixing the support (3) to the body.

5. Support (3) according to one of Claims 1 to 4, **characterized in that** the edges (5a) of the main wall (5) which are respectively adjacent to the side walls (8a, 8b) and the connecting wall (10) are curved.

6. Support (3) according to one of Claims 1 to 5, **characterized in that** the connecting edges (13) between the side walls (8a, 8b) and the first flaps (9a) which respectively extend them are reinforced by at least one stamping relief (14) of the sheet metal.

7. Support (3) according to one of Claims 1 to 6, **characterized in that** the respective transverse extensions (T1) of the side walls (8a, 8b) and/or their respective orientations relative to the main wall (5) are differentiated.

8. Motor vehicle comprising a body (1) equipped with at least one retractor (2) of a safety belt which is mounted on a support (3) fixed to at least one bodywork element (4) which comprises the body (1), **characterized in that** said support (3) is in accordance with any one of Claims 1 to 7.
